# EUROPÄISCHE PATENTSCHRIFT

(11) **EP 1 893 677 B1**
(45) Veröffentlichungstag und Bekanntmachung des Hinweises auf die Patenterteilung: **20.07.2011**
(21) Anmeldenummer: 06724726.2
(22) Anmeldetag: 05.05.2006
(51) Int. Cl.: C08K 3/04, C08K 5/00, C08K 5/01, B60C 1/00, C08L 9/00, C08L 21/00

(54) **KAUTSCHUKMISCHUNG UND REIFEN**
RUBBER MIXTURE AND TYRE
MELANGE A BASE DE CAOUTCHOUC ET PNEU

(30) Priorität: 16.06.2005 DE 102005027858
(43) Veröffentlichungstag der Anmeldung: 05.03.2008
(73) Patentinhaber: Continental Reifen Deutschland GmbH, 30165 Hannover (DE)
(72) Erfinder: MEISSNER, Steffi, 31552 Rodenberg (DE); WEINREICH, Hajo, 31840_ Hess Oldendorf (DE); DETTMER, Fabian, 38106 Braunschweig (DE); WAGEMANN, Jürgen, 31162 Bad Salzdetfurth (DE)
(74) Vertreter: Finger, Karsten
(86) Internationale Anmeldenummer: PCT/EP2006/004213
(87) Internationale Veröffentlichungsnummer: WO 2006/133770

(56) Entgegenhaltungen:
- EP-A- 0 448 793
- EP-A- 1 676 881
- EP-A- 1 676 882
- US-A- 2 582 264
- THE PETROLEUM HPV TESTING GROUP: "High Production Volume (HPV) Chemical Challenge Program Test Plan Aromatic Extracts Category" [Online] 15. Dezember 2003 (2003-12-15), US EPA , XP002393416 Gefunden im Internet: URL:http://www.petroleumhpv.org/Product_Ca tegories/Aromatic_Extracts/Aromatic%20Extr acts_FINAL_TestPlan_12-15-03.pdf> Seiten 6,8 Tabellen 1,2 -& AMERICAN REFINING GROUP INC.: "Kendex 0866 (CAS-RN:64742-10-5)"[Online] Mai 2002 (2002-05), XP002393412 Gefunden im Internet: URL:http://www.amref.com/ind_specs/KX-0866 .pdf> [gefunden am 2006-08-03]

## Beschreibung

Die Erfindung betrifft eine schwefelvernetzbare Kautschukmischung, die einen Dienkautschuk, Ruß und Weichmacher enthält. Ferner betrifft die Erfindung Reifen, insbesondere Fahrzeugluftreifen, deren Laufstreifen zumindest zum Teil auf der mit Schwefel vulkanisierten Kautschukmischung basieren.

Zur Beeinflussung der Mischungs- und Vulkanisateigenschaften werden den Mischungen unterschiedlichste Zuschlagstoffe beigemischt und/oder es werden spezielle Polymere verwendet. Als Zuschlagstoffe seien beispielhaft an dieser Stelle Füllstoffe (z. B. Ruß), Weichmacher, Vernetzungssysteme und Alterungsschutzmittel genannt. Wird durch Variation der Mischung eine Eigenschaft verbessert, geht dies aber häufig mit einer Verschlechterung einer anderen Eigenschaft einher, so dass gewisse Zielkonflikte vorliegen.

Es ist bekannt, zur Veränderung der Flexibilität von Mischungsvulkanisaten spezielle Polymere mit unterschiedlichen Glasübergangstemperaturen, unterschiedliche Vernetzungssysteme, Weichmacher (üblicherweise in der Reifenindustrie aromatische Mineralölweichmacher) und unterschiedliche Füllstoffe in unterschiedlichen Mengen einzusetzen, wobei die Flexibilität dann in der Regel über den gesamten Einsatztemperaturbereich erhöht oder erniedrigt wird. Eine Erhöhung der Flexibilität geht dann mit einer Verringerung der Steifigkeit, die sich beispielsweise im dynamischen Modul E' bei hoher Dehnung und bei hoher Temperatur widerspiegelt, einher.

Der Einsatz von Weichmachern aus Erdölfraktionen in Dienkautschukmischungen ist beispielsweise in der US 2,582,264, der EP 0 448 793 A1, der EP 1 676 882 A1 und der EP 1 676 881 A1 beschrieben.

Oft stellt sich allerdings das Problem, dass ein Vulkanisat eine hohe Flexibilität bei tiefen Temperaturen, bei hohen Temperaturen jedoch eine hohe Steifigkeit aufweisen soll. Dies ist z. B. der Fall bei Mischungen für den Laufstreifen von Fahrzeugreifen, insbesondere Fahrzeugluftreifen, die für gute Wintereigenschaften und gutes Nassbremsen eine hohe Tieftemperaturflexibilität und für gutes Handling und Trockenbremsen eine hohe Hochtemperatursteifigkeit aufweisen sollen.

Der vorliegenden Erfindung liegt daher die Aufgabe zu Grunde, Kautschukmischungen, insbesondere für die Laufstreifen von Fahrzeugreifen, bereitzustellen, deren Vulkanisate sich durch eine höhere Tieftemperaturflexibilität bei gleichzeitig hoher Hochtemperatursteifigkeit auszeichnen. Die Vulkanisatflexibilität soll thermisch entkoppelt werden. Bei Fahrzeugreifen, deren Laufstreifen auf einer solchen Mischung basieren, ergeben sich so gute Wintereigenschaften und gutes Nassbremsen sowie ein gutes Handling und gutes Trockenbremsen.

Gelöst wird diese Aufgabe erfindungsgemäß dadurch, dass die Kautschukmischung
- zumindest einen Dienkautschuk,
- 5 - 150 phr (Gewichtsteile bezogen auf 100 Gewichtsteile der Gesamtkautschukmasse) zumindest eines Rußes mit einer Iodadsorptionszahl > 65 g/kg und einer DBP-Zahl ≥ 90 cm³/100 g und
- 5 bis 150 phr einer Erdölfraktion des Typs RAE (residual aromatic extract) als Weichmacher
enthält, wobei das Gewichtsverhältnis von Ruß zur Erdölfraktion in der Mischung 1:1 bis 1:10 beträgt.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise wurde gefunden, dass durch die spezielle Kombination von 5 - 150 phr zumindest eines Rußes mit großer Oberfläche (Iodadsorptionszahl > 65 g/kg) und hoher Struktur (DBF-Zahl ≥ 90 cm³/100 g) mit 5 bis 150 phr einer Erdölfraktion des Typs RAE (residual aromatic extract) als Weichmacher in einem bestimmten Verhältnis in einer Dienkautschukmischung Vulkanisate erzeugt werden können, die bei niedrigen Temperaturen dynamisch weicher, d. h. flexibler sind und bei hohen Temperaturen eine gute dynamische Steifigkeit aufweisen. Die Steifigkeit und die Flexibilität können so entkoppelt werden und die Verbesserung der einen Eigenschaft zieht nicht die Verschlechterung der anderen nach sich. Spezieller Ruß und die Erdölfraktion des Typs RAE scheinen in synergistische Wechselwirkung zu treten.

Die schwefelvernetzbare Kautschukmischung enthält zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (40-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann. Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werfen.

Zusätzlich zu den genannten Dienkautschuken kann die Mischung aber auch noch andere Kautschuktypen, wie z.B. Styrol-Isopren-Butadien-Terpolymer, Butylkautschuk, Halobutylkautschuk oder Ethylen-Propylen-Dien-Kautschuk (EPDM), enthalten.

Die erfindungsgemäße Kautschukmischung enthält vorzugsweise 8 - 100 phr des oder der Ruße(s).

Der spezielle Ruß weist eine Iodadsorptionszahl (gemäß ASTM D 1510) > 65 g/kg, vorzugsweise > 110 g/kg, und einer DBP-Zahl (gemäß ASTM D 2414) ≥ 90 cm³/100 g auf. Bei höherer Struktur oder höherer Oberfläche kann eine bessere Tieftemperaturflexibilität erzielt werden. Es können beispielsweise Ruße der Typen N-121, N-339 und HV-3396 (Columbian Chemicals Company, USA) verwendet werden.

Als Füllstoffe kann die Kautschukmischung neben dem speziellen Ruß auch noch andere Ruße, Kieselsäure, Aluminiumhydroxid, Schichtsilikate, Kreide, Stärke, Magnesiumoxid, Titandioxid, Kautschukgele usw. in beliebigen Kombinationen enthalten.

Die Kautschukmischung enthält 5 - 150 phr, vorzugsweise 15 bis 90 phr, der Erdölfraktion des Typs RAE. Die Erdölfraktionen werden üblicherweise gemäß dem American Petroleum Institut benannt und klassifiziert. Bei der Erdölfraktion des Typs RAE, die bislang in der Reifenindustrie keinen Einsatz fand, handelt es sich um die Erdölfraktion aus der Lösemittelextraktion der Vakuumdestillatrückstände, enthaltend gesättigte und ungesättigte Kohlenwasserstoffe, hauptsächlich > C₂₅ ("streams obtained from the solvent extraction of vacuum residues, and containing saturated and aromatic hydrocarbons, mainly in the range > C₂₅"). Es kann beispielsweise FLAVEX 595 der Firma Shell verwendet werden. Erdölfraktionen des Typ RAE weisen zusätzlich den Vorteil auf, dass sie nicht kennzeichnungspflichtig sind.

Neben den bereits genannten Inhaltsstoffen kann die Kautschukmischung weitere in der Kautschukindustrie übliche Zusatzstoffe, wie z. B. weitere Weichmacher, Alterungsschutzmittel, Aktivatoren, wie z. B. Zinkoxid und Fettsäuren (z. B. Stearinsäure), Wachse, Harze, Silankupplungsagenzien und Mastikationshilfsmittel in üblichen Gewichtsteilen, enthalten.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N`-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form, z. B. die Form eines Laufstreifenrohlings, gebracht. Ein so erzeugter Laufstreifenmischungsrohling wird bei der Herstellung des Fahrzeuglufireifenrohlings wie bekannt aufgelegt. Der Laufstreifen kann auch in Form eines schmalen Kautschukstreifens aufgespult werden.

Nach der Vulkanisation weisen die Vulkanisate eine gute Tieftemperaturflexibilität bei guter Hochtemperatursteifigkeit auf. Fahrzeugluftreifen mit einem Laufstreifen aus einer solchen Mischung weisen gute Wintereigenschaften, d. h. gute Traktion auf eisigem und schneeigem Untergrund, gutes Nassbremsen und gleichzeitig gute Handlingeigenschaften und gutes Trockenbremsen auf.

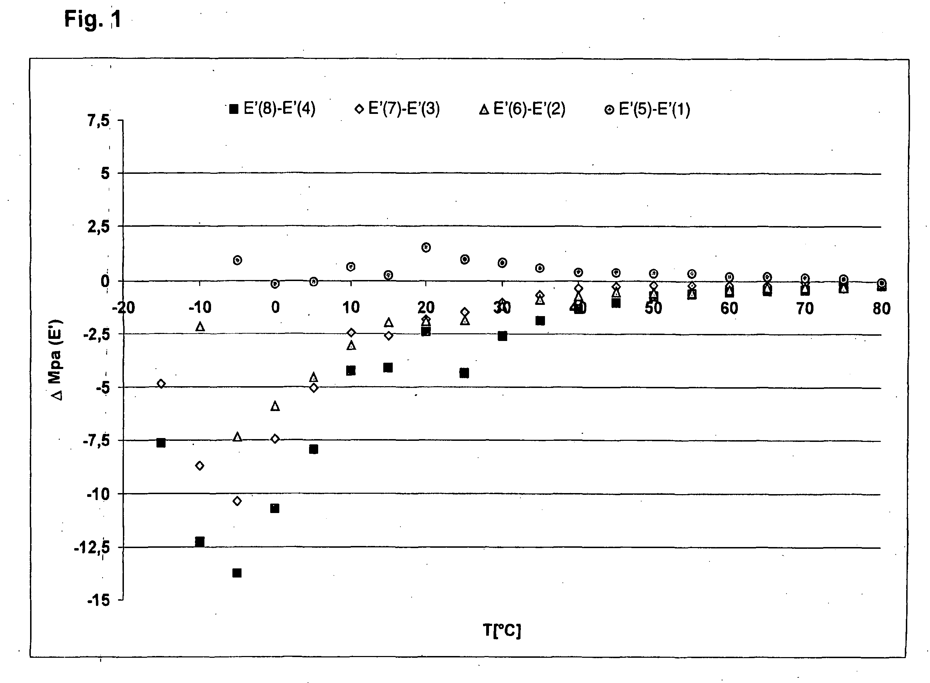

Die Erfindung soll nun anhand von Vergleichs- und Ausführungsbeispielen, die in den Tabellen 1 und der Fig. 1 zusammengefasst sind, näher erläutert werden.

Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet. Die Mischungen in der Tabelle 1 unterschieden sich nur in verwendeten Ruß und im verwendeten Öl, die übrigen Mischungsbestandteile blieben unverändert. Der Ruß wurde in allen Mischungen so dosiert, dass sich für die Vulkanisate nahezu gleiche Shore-A-Härten bei Raumtemperatur ergaben.

Die Mischungsherstellung erfolgte unter üblichen Bedingungen in zwei Stufen in einem Labortangentialmischer. Aus sämtlichen Mischungen wurden Prüfkörper durch 20-minütige Vulkanisation unter Druck bei 160 °C hergestellt und mit diesen Prüfkörpern für die Kautschukindustrie typische Materialeigenschaften bestimmt, die in der Tabelle 1 aufgelistet sind. Für die Tests an Prüfkörpern wurden folgende Testverfahren angewandt:
- Spannungswerte bei 200 % Dehnung bei Raumtemperatur gemäß DIN 53 504
- Shore-A-Härte bei Raumtemperatur und 70 °C gemäß DIN 53 505
- dynamischer Speichermodul E' gemäß DIN 53 513 aus Messung mit konstanter Spannungsamplitude von 50 ± 30 N bei einer Frequenz von 10 Hz von -20 °C bis 80 °C in Schritten von 5 K (absolute E'-Werte bei -5 °C und bei 80 °C sind exemplarisch in der Tabelle 1 aufgeführt)

**Tabelle 1**

| **Bestandteile** | **Einheit** | **1(V)** | **2(V)** | **3(V)** | **4(V)** | **5(V)** | **6(E)** | **7(E)** | **8(E)** |
|---|---|---|---|---|---|---|---|---|---|
| BR^{a} | phr | 30 | 30 | 30 | 30 | 30 | 30 | 30 | 30 |
| SSBR^{b} | phr | 70 | 70 | 70 | 70 | 70 | 70 | 70 | 70 |
| Ruß N.660^{c} | phr | 86 | - | - | - | 86 | - | - | - |
| Ruß N-339^{d} | phr | - | 58 | - | - | - | 58 | - | - |
| Ruß N-121^{e} | phr | - | - | 50 | - | - | - | 50 | - |
| Ruß HV-3396^{f} | phr | - | - | - | 50 | - | - | - | 50 |
| Kieselsäure | phr | 50 | 50 | 50 | 50 | 50 | 50 | 50 | 50 |
| Aromatischer Mineralölweichmacher | phr | 55 | 55 | 55 | 55 | - | - | - | - |
| RAE^{g} | phr | - | - | - | - | 55 | 55 | 55 | 55 |
| Alterungsschutzmittel | phr | 2 | 2 | 2 | 2 | 2 | 2 | 2 | 2 |
| Ozonschutzwachs | phr | 2 | 2 | 2 | 2 | 2 | 2 | 2 | 2 |
| Zinkoxid | phr | 3 | 3 | 3 | 3 | 3 | 3 | 3 | 3. |
| Stearinsäure | phr | 2 | 2 | 2 | 2 | 2 | 2 | 2 | 2 |
| Silankupplungsagens | phr | 5 | 5 | 5 | 5 | 5 | 5 | 5 | 5 |
| Beschleuniger | phr | 3,3 | 3,3 | 3,3 | 3,3 | 3,3 | 3,3 | 3,3 | 3,3 |
| Schwefel | phr | 2 | 2 | 2 | 2 | 2 | 2 | 2 | 2 |

| **Eigenschaften** | | | | | | | | | |
|---|---|---|---|---|---|---|---|---|---|
| Spannungswert 200 % | N/mm² | 7,8 | 6,03 | 4,98 | 4,44 | 8,0 | 6,27 | 5,02 | 4,27 |
| Härte bei RT | Shore A | 71 | 70 | 69 | 69 | 70 | 70 | 68 | 68 |
| Härte bei 70 °C | Shore A | 65 | 63 | 60 | 59 | 65 | 63 | 60 | 59 |
| E' bei-5 5 °C | MPa | 54 | 83 | 73 | 97 | 55 | 76 | 63 | 84 |
| E' bei 80 °C | MPa | 6,707 | 7,120 | 6,142 | 6,113 | 6,699 | 7,090 | 6,211 | 6,142 |

| | | | | | | | | | |
|---|---|---|---|---|---|---|---|---|---|
| ^{a} High-cis Polybutadien ^{b} lösungspolymerisiertes Styrol-Butadien-Copolymer, Styrolgehalt: 25 Gew.-%, Vinylanteil 50 % ^{c} Iodadsorptionszahl = 50 g/kg und einer DBF-Zahl = 90 cm³/100 g ^{d} Iodadsorptionszahl = 120 g/kg und einer DBP-Zahl = 90 cm³/100 g ^{e} Iodadsorptionszahl = 120 g/kg und einer DBP-Zahl = 130 cm³/100 ^{f} Iodadsorptionszahl = 165 g/kg und einer DBP-Zahl = 125 cm³/100 g ^{g} FLAVEX 595 der Firma Shell; Dichte bei 15 °C: 980 kg/m³ (gemäß ISO 12185), Brechungsindex bei 20 °C: 1,55 (gemäß ASTM D 1218), Pourpoint (Stockpunkt): 15°C (gemäß ISO 3016), kinematische Viskosität bei 40 °C: 3300 mm²/s (gemäß ISO 3104), Viskositäts-Dichte-Konstante:0,916 (gemäß DIN 51378), Schwefelgehalt: 4 Gew.-% (gemäß ISO 14596), Gehalt an Kohlenwasserstoffen schwefelkorrigiert (gemäß DIN 51378): aromatisch C_{A}:29 %, naphthenisch CN: 15 %, paraffinisch C_{P}: 56 %, Refraktions-Interzept: 1,060 (gemäß DIN 51378) | | | | | | | | | |

Der dynamische Modul E' bei 80 °C korreliert mit der Hochtemperatursteifigkeit der Vulkanisate bei Belastung, wobei größere E'-Werte eine höhere Steifigkeit bedeuten. Ein hoher dynamischer Modul E' bei diesen Bedingungen wird als Indiz für ein gutes Handlingpotenzial der Mischung und einen gutes Trockenbremsverhalten bei Verwendung im Reifen angesehen. Je kleiner der dynamische Modul E' bei tiefen Temperaturen, desto höher ist die Tieftemperaturflexibilität der Vulkanisate. Bei Reifen geht ein kleiner dynamischer Modul E' bei -5 °C mit guten Wintereigenschaften und gutem Nassbremsen einher.

Aus der Tabelle 1 wird ersichtlich, dass erst die spezielle Kombination von Ruß mit einer Iodadsorptionszahl > 65 g/kg und einer DBP-Zahl ≥: 90 cm³/100 g mit der Erdölfraktion des Typs RAE eine Verbesserung der Tieftemperaturflexibilität der Vulkanisate bringt, ohne dass die Hochtemperatursteifigkeit verschlechtert wird. Besonders deutlich wird die Verbesserung im Vergleich zu Mischungen, die einen aromatischen Mineralölweichmacher enthalten, in Figur 1 sichtbar, dabei zeigt
- Figur 1: ein Diagramm, in dem die Differenz aus den dynamischen Moduli E' (ΔE') der Mischungen mit RAE und denen mit aromatischem Öl (E' der 5(V) - E' der 1 (V), E' der 6(E) - E' der 2(V), usw.) gegen die Temperatur aufgetragen ist.

Anhand der Figur 1 wird nochmals deutlich, dass mit den erfindungsgemäßen Mischungen der dynamische Modul E' im Vergleich zu den Mischungen mit aromatischen Mineralölweichmacher oder der Mischung mit dem Ruß des Typs N-660 im Temperaturbereich unterhalb von ca. 30 °C reduziert wird. Im Bereich oberhalb von 30 °C wird ist der dynamische Modul E' jedoch für die Mischungen annähernd gleich, so dass keine Verschlechterung der Hochtemperatursteifigkeit zu verzeichnen ist.

## Patentansprüche

1. Schwefelvernetzbare Kautschukmischung, enthaltend
- zumindest einen Dienkautschuk,
- 5 - 150 phr (Gewichtsteile bezogen auf 100 Gewichtsteile der Gesamtkautschukmasse) zumindest eines Rußes mit einer Iodadsorptionszahl > 65 g/kg und einer DBP-Zahl ≥ 90 cm³/100 g und
- 5 bis 150 phr einer Erdölfraktion des Typs RAE (residual aromatic extract) als Weichmacher,
wobei das Gewichtsverhältnis von Ruß zur Erdölfraktion in der Mischung 1:1 bis 1:10 beträgt.

2. Kautschukmischung nach Anspruch 1, **dadurch gekennzeichnet, dass** sie 8 bis 100 phr des Rußes enthält.

3. Kautschukmischung nach Anspruch 1 oder 2, **dadurch gekennzeichnet, dass** der Ruß eine Iodadsorptionszahl > 110 g/kg aufweist.

4. Kautschukmischung nach zumindest einem der vorhergehenden Ansprüche, **dadurch gekennzeichnet, dass** sie 15 bis 90 phr der Erdölfraktion des Typs RAE aufweist.

5. Reifen, insbesondere Fahrzeugluftreifen, dessen Laufstreifen zumindest zum Teil auf einer mit Schwefel vulkanisierten Kautschukmischung nach einem der Ansprüche 1 bis 4 basiert.

## Claims

1. Sulfur-crosslinkable rubber mixture, comprising
- at least one diene rubber,
- from 5 to 150 phr (parts by weight, based on 100 parts by weight of the entire rubber composition) of at least one carbon black whose iodine adsorption number is > 65 g/kg and whose DBP number is ≥ 90 cm³/100 g, and
- from 5 to 150 phr of a petroleum fraction of RAE (residual aromatic extract) type, as plasticizer,
where the ratio by weight of carbon black to the petroleum fraction in the mixture is from 1:1 to 1:10.

2. Rubber mixture according to Claim 1, **characterized in that** it comprises from 8 to 100 phr of the carbon black.

3. Rubber mixture according to Claim 1 o r 2, **characterized in that** the iodine adsorption number of the carbon black is > 110 g/kg.

4. Rubber mixture according to at least one of the preceding claims, **characterized in that** it comprises from 15 to 90 phr of the petroleum fraction of RAE type.

5. Tire, in particular pneumatic tire for a vehicle, where at least to some extent the tire tread is based on a sulfur-vulcanized rubber mixture according to any of Claims 1 to 4.

## Revendications

1. Mélange de caoutchoucs réticulable par le soufre, contenant
- au moins un caoutchouc diène,
- 5-150 phr (parties en poids par rapport à 100 parties en poids de la masse totale de caoutchouc) d'au moins une suie présentant un indice d'adsorption d'iode > 65 g/kg et un indice DBP ≥ 90 cm³/100 g et
- 5 à 150 phr d'une fraction de pétrole du type RAE (residual aromatic extract) comme plastifiant,
où le rapport pondéral de la suie à la fraction de pétrole dans le mélange est de 1:1 à 1:10.

2. Mélange de caoutchoucs selon la revendication 1, **caractérisé en ce qu'**il contient 8 à 100 phr de la suie.

3. Mélange de caoutchoucs selon la revendication 1 ou 2, **caractérisé en ce que** la suie présente un indice d'adsorption de l'iode > 110 g/kg.

4. Mélange de caoutchoucs selon au moins l'une quelconque des revendications précédentes, **caractérisé en ce qu'**il présente 15 à 90 phr de la fraction de pétrole du type RAE.

5. Pneus, en particulier pneus pour véhicules, dont la bande de roulement est, au moins partiellement, à base d'un mélange de caoutchoucs vulcanisé avec du soufre selon l'une quelconque des revendications 1 à 4.
